(19) Europäisches Patentamt / European Patent Office / Office européen des brevets

(11) **EP 3 479 096 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(51) Int Cl.:
***G01N 15/02*** *(2006.01)*

(21) Anmeldenummer: **17735109.5**

(22) Anmeldetag: **03.07.2017**

(86) Internationale Anmeldenummer:
**PCT/EP2017/066516**

(87) Internationale Veröffentlichungsnummer:
**WO 2018/007328 (11.01.2018 Gazette 2018/02)**

(54) **VERFAHREN ZUR BESTIMMUNG DER MITTLEREN PARTIKELGRÖSSE VON PARTIKELN, DIE IN EINEM FLÜSSIGEN UND FLIESSENDEN MEDIUM SUSPENDIERT SIND, ÜBER DYNAMISCHE LICHTSTREUUNG UND VORRICHTUNG HIERZU**

METHOD FOR DETERMINING THE AVERAGE PARTICLE SIZE OF PARTICLES, WHICH ARE SUSPENDED IN A LIQUID AND FLOWING MEDIUM, BY MEANS OF DYNAMIC LIGHT SCATTERING, AND A DEVICE THEREFOR

PROCÉDÉ PERMETTANT DE DÉTERMINER PAR DISPERSION DYNAMIQUE DE LA LUMIÈRE LA TAILLE MOYENNE DE PARTICULES EN SUSPENSION DANS UN MILIEU LIQUIDE OU FLUIDE, ET DISPOSITIF AFFÉRENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2016 DE 102016212164**

(43) Veröffentlichungstag der Anmeldung:
**08.05.2019 Patentblatt 2019/19**

(73) Patentinhaber: **Fraunhofer-Gesellschaft zur Förderung der angewandten Forschung e.V.
80686 München (DE)**

(72) Erfinder:
• **HÖBEL, Peter**
**55129 Mainz (DE)**

• **MASKOS, Michael**
**55294 Bodenheim (DE)**

(74) Vertreter: **Pfenning, Meinig & Partner mbB
Patent- und Rechtsanwälte
Theresienhöhe 11a
80339 München (DE)**

(56) Entgegenhaltungen:
**WO-A2-2015/136038 KR-A- 20150 119 765
US-A1- 2014 132 943 US-B1- 6 473 698**

• **LILI LIU ET AL: "Particle-size Measurements in a Micro-channel with Image Dynamic Light Scattering Method", PROCEDIA ENGINEERING, Bd. 102, 1. Januar 2015 (2015-01-01), Seiten 904-910, XP055407139, AMSTERDAM, NL ISSN: 1877-7058, DOI: 10.1016/j.proeng.2015.01.211**

EP 3 479 096 B1

**Beschreibung**

Die Erfindung betrifft die Größenbestimmung von Partikeln in einer fließenden Probe mit Hilfe von Lichtstreuungsmessungen. Die Erfindung basiert darauf, dass zunächst Streulicht an einem Detektor in Form von Bildern detektiert wird, eine Normierung der gemessenen Bilder stattfindet und eine Bestimmung eines Versatzes und eines Drehwinkels zumindest eines Teilbereichs von zwei zeitlich aufeinander folgenden Bildern relativ zueinander erfolgt, diese Information genutzt wird, um die beiden Bilder zur Deckung zu bringen. Die zur Deckung gebrachten Bilder werden in viele Teilflächen mit jeweils einer bestimmten Anzahl an Bildpixeln unterteilt und eine Mittelung der Helligkeitswerte jeder einzelnen Teilfläche durchgeführt. Anschließend wird der mittlere Helligkeitswert einer Teilfläche des ersten Bildes wird mit dem mittleren Helligkeitswert, der mit dieser Teilfläche im zweiten Bild zur Deckung gebrachten Teilfläche, korreliert (Kreuzkorrelation zwischen den Bildern). Für jedes Paar an zur Deckung gebrachten Teilflächen der Bilder ergibt sich dabei ein Korrelationswert. Danach wird über alle berechneten Korrelationswerte gemittelt. Heraus kommt ein mittlerer Korrelationswert für jedes Bilderpaar. Dann wird die Verzögerungszeit des Detektors variiert, um eine Autokorrelationsfunktion der Streulichtsignale zu bestimmen und daraus die mittlere Größe der Partikel zu berechnen.

Die dynamische Lichtstreuung ist vor allem zur Bestimmung von Partikelgrößen im Nanometerbereich, also für Größen unterhalb der Wellenlänge des sichtbaren Lichts geeignet. Es können aber auch größere Partikel vermessen werden. Werden kleine Partikel mit Licht bestrahlt, deren Wellenlänge im Größenbereich der Partikeldurchmesser liegt, so entsteht Rayleigh-Streuung.

Bestrahlt man kleine Partikel mit Laserlicht, so entsteht kohärentes Streulicht. Das gestreute Licht vieler Partikel überlagert sich und bildet Interferenzmuster. Sind die Partikel in einer Suspension mit z.B. Wasser, so vollziehen sie brownsche Bewegung. Daher werden bei Bestrahlung einer Partikelsuspension dynamische Interferenzmuster erzeugt. Die zeitliche Entwicklung dieser Muster wird bei der dynamischen Lichtstreuung (DLS) vermessen.

So wie die Brownsche Bewegung der Partikel ist das mit dem Detektor nachgewiesene Signal, bei einer ausreichend großen Partikelanzahl, rein statistisch. Durch Multiplikation zweier Signalwerte mit einem zeitlichen Abstand $\tau$ und anschließender Mittelwertbildung über die Produkte vieler Wertepaare, kann die Korrelation $\langle A \rangle_\tau$ des Signals für die Korrelationszeit $\tau$ über den Zusammenhang $\langle A \rangle_\tau = (A1_\tau + A2_\tau + A3_\tau + ... An_\tau)/n$, mit n = eine ganze Zahl größer 0, berechnet werden. Verhält sich die Probe ergodisch, also verändert sie ihre statistischen Eigenschaften während der gesamten Messzeit nicht (stabile Temperatur, Teilchenanzahl, etc.), so kann die Mittelwertbildung prinzipiell auf zwei Arten geschehen (Ergodenhypothese):

1. Das Signal eines Detektors wird über einen langen Zeitraum verfolgt und es wird über die Produkte vieler zeitlich nacheinander gemessener Wertepaare gemittelt d.h. der Zeitmittelwert wird berechnet; oder
2. Es werden die Signale einer großen Anzahl von gleichzeitig und unter den gleichen Bedingungen messender Detektoren ausgewertet. Hierbei erzeugt jeder Detektor nur ein Wertepaar. Unter der Bedingung, dass die Ergodenhypothese für das Experiment gültig ist, wird über die Produkte der Wertepaare aller Detektoren gemittelt d.h. das Scharmittel wird berechnet.

Durch Berechnung der Korrelationswerte für viele verschiedene Korrelationszeiten lässt sich die Autokorrelationsfunktion des Signals bestimmen. Zur Bestimmung der Autokorrelationsfunktion werden die berechneten Korrelationswerte gegen die entsprechenden Korrelationszeiten aufgetragen. Die Autokorrelationsfunktion lässt sich im einfachsten Fall mit einem monoexponentiellen Zerfall fitten. Dieser idealisierte Fall tritt ein, wenn alle Partikel der Probe kugelförmig sind und die gleiche Größe haben. In diesem Fall gilt:

$$\langle A(0)A(\tau) \rangle \approx y_0 + C \cdot e^{\left(-\frac{1}{\tau_D} \cdot \tau\right)}$$

Die Zeitkonstante ist proportional zu dem Kehrwert des Diffusionskoeffizienten der Partikel in der Suspension $\tau_D \sim 1/D$. Daher lässt sich $D$ aus $\tau_D$ mit Hilfe des bekannten Streuwinkels, der Laserwellenlänge und des Brechungsindexes des Lösungsmittels berechnen. Über den Diffusionskoeffizienten $D$, die Temperatur T und die Viskosität $\eta$ des Lösungsmittels ergibt sich der hydrodynamische Radius $R_h$ der Partikel und damit die Partikelgröße dann aus der Stokes-Einstein-Gleichung. Werden große Partikel, mit langsamer Brownscher Bewegung, vermessen, so fällt die Autokorrelationsfunktion langsam ab. Werden dagegen kleine Partikel vermessen fällt die Autokorrelationsfunktion schnell ab. Daher müssen bei der Größenbestimmung kleinerer Partikel kürzere Korrelationszeiten vermessen werden um die Autokorrelationsfunktion ausreichend zu bestimmen als bei größeren Partikeln.

Um Messungen an mit gleichförmiger Geschwindigkeit durch das Streuvolumen fließenden Proben durchzuführen, wird eine für eine fließende Probe angepasste Fitfunktion zur Auswertung der aus den Messwerten berechneten Autokorrelationsfunktion verwendet (für zeitgemittelte Messungen siehe z.B. Kwang, I. et al., 2006, Applied Optics, Bd. 45, S. 2186-2190). Ein großer Nachteil für zeitgemittelten Messungen ergibt sich jedoch, wenn größere Partikel oder Partikel in Proben mit hoher Viskosität vermessen werden sollen. Da in diesen Fällen die Zerfallszeiten der Autokorrelationsfunktion, wegen der verlangsamten brownschen Bewegung, relativ lang sind, verlängert sich auch die gesamte Messzeit, weil längere Korrelationszeiten vermessen werden müssen. Dies stellt wiederum Anforderungen an die Homogenität der Probe, die für die Bestimmung der mittleren Partikelgröße von Partikeln in dem Messverfahren bzw. der Messvorrichtung verwendet werden soll. Wenn sich während der Messung deren Eigenschaften ändern, erzeugt das Abweichungen in den Messergebnissen. Für Messungen an fließenden Proben ist daher ein Messverfahren mit Scharmittelung im Gegensatz zu einem Verfahren mit Zeitmittelung besser geeignet (für ein Messverfahren mit Scharmittelung siehe z.B. Liu et al., 2015, Procedia Engineering, Bd. 102, S. 904-910).

In einem Messverfahren mit Scharmittelung wird eine Hochgeschwindigkeitskamera zur Datenaufnahme verwendet. Die berechneten Korrelationswerte werden hier ebenfalls mit der für Flussmessungen angepassten Fitfunktion ausgewertet. Der Vorteil dieses Verfahrens liegt in der kurzen Messzeit. Es sind Momentaufnahmen einer fließenden Probe möglich. Der Nachteil besteht in der durch die Bildrate der Hochgeschwindigkeitskamera bedingten unteren Grenze für den zeitlichen Abstand zweier Messungen und damit der Korrelationszeiten. Kleine Partikel und hohe Flussgeschwindigkeiten, welche Autokorrelationsfunktionen mit sehr kurzen Zerfallszeiten hervorrufen würden, können daher nicht vermessen werden.

Ferner wird für die Messung an einer fließenden Probe im Stand der Technik eine für Flussmessungen angepasste Fitfunktion zur Auswertung der aus den Messwerten berechneten Autokorrelationsfunktion verwendet. Dadurch entstehen mehrere Nachteile:

- Die spätere Datenauswertung wird schwieriger. Es wäre wesentlich einfacher, wenn bei einer Flussmessung die gleiche Datenverarbeitung wie bei einer Messung ohne Fluss verwendet werden könnte. Für Messungen ohne Fluss gibt es bereits mehrere fundierte Verfahren zur Analyse der berechneten Korrelationswerte, auch für sehr "schwierige" Proben mit Partikelgrößenverteilungen und nicht sphärische Partikeln (siehe z.B. Puthusserickal S.R. et al., 2015, Langmuir, Bd. 31, S. 3-12);
- Während der Messung muss die Flussgeschwindigkeit konstant bleiben, da diese sich auf die Form der Autokorrelationsfunktion auswirkt; und
- Die maximale Flussgeschwindigkeit, bei der noch Messungen durchgeführt werden können, ist von der kleinsten messbaren Korrelationszeit abhängig.

Werden zwei durch einen Strahlteiler gekoppelte Pixelsensoren verwendet, so müssen diese dort mikrometergenau aufeinander justiert sein. Nur so ist gewährleistet, dass die korrespondierenden Pixel beider Detektoren genau den gleichen Winkelbereich des Streulichts vermessen, und ihre Signale korrelierbar sind. Das macht die Produktion eines auf diesem Messverfahren basierenden Messgeräts zeit- und kostenintensiv und den Aufbau anfällig für Erschütterungen.

Ausgehend hiervon war es die Aufgabe der vorliegenden Erfindung ein Verfahren und eine Vorrichtung bereitzustellen, mit dem/der die Größe von Partikeln in flüssigen und fließenden Proben innerhalb eines kurzen Zeitrahmens mit hoher Genauigkeit bestimmt werden kann.

Die Aufgabe wird gelöst durch das Verfahren gemäß Anspruch 1 und die Vorrichtung gemäß Anspruch 9. Die abhängigen Ansprüche zeigen vorteilhafte Weiterbildungen auf.

Erfindungsgemäß wird ein Verfahren zur Bestimmung der mittleren Partikelgröße von Partikeln, die in einem flüssigen und fließenden Medium suspendiert sind, über dynamische Lichtstreuung, bereitgestellt, umfassend die Schritte

a) Leiten von einem flüssigen Medium mit bestimmter Viskosität und bestimmten Brechungsindex, das in suspendierter Form Partikel enthält in einem laminaren Strom durch eine Durchflussküvette entlang einer Flussrichtung;

b) Einstrahlen von Laserlicht mit einer bestimmten Wellenlänge in einer Einstrahlrichtung auf das flüssige Medium über einen Laser, wobei zwischen dem Laser und der Durchflussküvette ein Kollimator angeordnet ist oder wird;

c) Messung der Temperatur des flüssigen Mediums;

d) Messung der Intensität von gestreutem Laserlicht über einen Detektor in Form von Bildern, wobei der Detektor senkrecht zur Flussrichtung und in einem bestimmten Winkel von 10° bis < 180° zur Einstrahlrichtung angeordnet ist oder wird und der Detektor

i) einen Strahlteiler enthält, der das gestreute Laserlicht auf einen ersten und einen zweiten lichtempfindlichen Sensor ablenkt, wobei die beiden Sensoren dazu geeignet sind, Bilder mit jeweils einer bestimmten Anzahl an Bildpixeln zu detektieren, und wobei die beiden Sensoren so konfiguriert werden oder sind, dass sie mit einer bestimmten Verzögerungszeit alternierend gestreutes Laserlicht als Bild detektieren; oder

ii) eine Kamera enthält, die eine lichtempfindliche Sensorfläche aufweist, die dazu geeignet ist, Bilder mit jeweils einer bestimmte Anzahl an Bildpixeln zu detektieren, wobei die Sensorfläche so konfiguriert wird oder ist, dass sie mit einer bestimmten Verzögerungszeit zwischen zwei aufeinander folgenden Bildern gestreutes Laserlicht als Bild detektiert; und

e) Übermitteln der am Detektor gemessenen Bilder an eine Datenverarbeitungsvorrichtung, wobei die Datenverarbeitungsvorrichtung die folgenden Schritte durchführt:

1) Normierung der gemessenen Bilder, sodass die gemessene Intensität des Laserlichts (d.h. die Belichtungswerte der Bildpixel) bei allen Bildern den gleichen Mittelwert und die gleiche Standardabweichung erhält;

2) Bestimmung eines Versatzes und eines Drehwinkels von einem Muster auf zumindest einem Teilbereich von einem ersten Bild zu einem Muster auf zumindest einem Teilbereich von einem zeitlich darauf folgenden zweiten Bild und Nutzung dieser Information, um die Muster der beiden Bilder zur Deckung zu bringen;

3) Unterteilung der zur Deckung gebrachten Bilder jeweils in viele einzelne Teilflächen mit jeweils einer bestimmten Anzahl an Bildpixeln und Mittelung der Helligkeitswerte der Bildpixel der vielen einzelnen Teilflächen; und

4) Korrelieren der gemittelten Helligkeitswerte der Bildpixel der vielen einzelnen Teilflächen des ersten Bildes mit den gemittelten Helligkeitswerten der Bildpixel der vielen einzelnen deckungsgleichen Teilflächen des zweiten Bildes (Kreuzkorrelation zwischen den einzelnen Bildern), wobei sich für jedes Paar der zur Deckung gebrachten Teilflächen der beiden Bilder ein Korrelationswert ergibt;

5) Mittelung über alle erhaltenen Korrelationswerte zu einem mittleren Korrelationswert für die beiden Bilder.

Das Verfahren ist dadurch gekennzeichnet, dass die Schritte c) bis d) bei mindestens einer ersten und einer zweiten, zur ersten verschiedenen Verzögerungszeit durchgeführt werden, aus den hierbei jeweils erhaltenen, gemittelten Korrelationswerten eine Autokorrelationsfunktion angegeben wird und anhand der Autokorrelationsfunktion, der gemessenen Temperatur des flüssigen Mediums, der Viskosität und dem Brechungsindex des flüssigen Mediums, der Wellenlänge des Laserlichts dem Winkel des Detektors die mittlere Partikelgröße bestimmt wird.

Bei dem Muster bei der Bestimmung eines Versatzes und eines Drehwinkels kann es sich um ein Interferenzmuster handeln.

Unter dem Begriff "bestimmt" in Bezug auf die Viskosität des flüssigen Mediums, den Brechungsindex des flüssigen Mediums, die Wellenlänge des Laserlichts und den Winkel des Detektors wird ein konkreter und bekannter Wert für die Viskosität des flüssigen Mediums, den Brechungsindex des flüssigen Mediums, die Wellenlänge des Laserlichts und den Winkel des Detektors verstanden.

Die Verzögerungszeit zwischen zwei zeitlich aufeinander folgenden Bildern ist die Korrelationszeit, gegen die der später im Verfahren berechnete Korrelationswert der beiden Bilder (in der Autokorrelationsfunktion) aufgetragen wird. Nach den Belichtungen muss die Totzeit der Sensoren abgewartet werden. Danach sind die Sensoren wieder einsatzbereit und die nächsten Bilder können aufgenommen werden.

Ein Vorteil des erfindungsgemäßen Verfahrens ist, dass durch die Bestimmung eines Versatzes und eines Drehwinkels zumindest eines Teilbereichs von zwei zeitlich aufeinander folgenden Bildern relativ zueinander ein Ausgleich der Flussbewegung stattfindet. Dadurch können Verfahren zur Messdatenverarbeitung verwendet werden, welche für fließende Proben weniger geeignet sind. Auch Proben mit großen Flussgeschwindigkeiten sind dadurch vermessbar. Ferner muss hierbei die Flussgeschwindigkeit während der Messung nicht konstant sein, sondern kann variieren, da die Variation ausgeglichen wird. Das Verfahren ist kostengünstig durchführbar, da sich die in dem Verfahren verwendeten Teile für Sensoren und Laser in kostengünstigen Konsumprodukten wie Digitalkameras oder Videoprojektoren finden.

Die Variante des erfindungsgemäßen Verfahrens, bei der über einen Strahlteiler zwei Sensoren alternierend eingesetzt werden, hat den zusätzlichen Vorteil, dass die zeitliche Verzögerung zwischen den Bildern am ersten Sensor und am zweiten Sensor von der maximalen Bildraten der Sensoren bzw. deren Totzeit unabhängig ist. Nachdem der erste Pixeldetektor gemessen hat und nun bis zum Ende seiner Totzeit abwarten muss, wird die zweite Messung durch den zweiten Pixeldetektor durchgeführt. Daher können die Messungen in wesentlich kürzerem Zeitabstand als bei einer Hochgeschwindigkeitskamera durchgeführt werden und kürzere Korrelationszeiten sind möglich.

Die Bestimmung eines Versatzes und eines Drehwinkels zumindest eines Teilbereichs von zwei zeitlich aufeinander folgenden Bildern relativ zueinander kann folgendermaßen stattfinden: Ein kleiner Bildausschnitt aus einem ersten Bild wird an verschiedenen Positionen und unter verschiedenen Drehwinkeln mit einem gleich großen Teil von dem zeitlich darauf folgenden zweiten Bild verglichen. Dies erfolgt zum Beispiel indem an den verschiedenen Positionen und mit verschiedenen Drehwinkeln die Standardabweichung oder ein Korrelationswert zwischen dem Ausschnitt aus dem ersten mit der jeweiligen Stelle im zweiten Bild berechnet wird. Je größer der Korrelationswert bzw. je kleiner die Standardabweichung, desto besser passt der Ausschnitt aus dem ersten Bild an der jeweiligen Stelle in dem zweiten Bild. Durch viele Versuche wird so die Position gefunden, bei der der Ausschnitt aus dem ersten Bild optimal in das zweite Bild hineinpasst. Daraus wird die Verschiebung und die Drehung zwischen den Bildern berechnet. Um die wegen des Flusses gegeneinander verschobenen, zeitlich aufeinander folgenden Bilder zur Deckung zu bringen ist eine Konfiguration von Laser, Durchflussküvette und Detektor nötig, wie sie in dem erfindungsgemäßen Verfahren beschrieben ist. Tatsächlich ergeben sich nur mit der beschriebenen Konfiguration von Laser, Durchflussküvette und Detektor überhaupt durch den Fluss des flüssigen Mediums mit den darin suspendierten Partikeln gegeneinander verschobene Bilder. Wäre die Konfiguration anders, so würde sich zwei zeitlich aufeinanderfolgende Bilder (d.h. das zweite Bild zum ersten Bild) nicht verschieben. Zwei zeitlich aufeinanderfolgende Bilder würden einfach nur umso mehr voneinander abweichen, je schneller das flüssige Medium mit den suspendierten Partikeln (d.h. die Probe) durch die Durchflussküvette fließt. Im Gegensatz zum Stand der Technik ist es erfindungsgemäß nicht nötig, diese Abweichung mit einer für den Fluss angepassten Auswertung der Autokorrelationsfunktion auszugleichen. Folglich ist es mit dem erfindungsgemäßen Verfahren möglich, eine Partikelgrößenbestimmung in einem weit größeren Flussgeschwindigkeits- und Partikelgrößenbereich durchzuführen.

Die Unterteilung der zur Deckung gebrachten Bilder in viele Teilflächen mit jeweils einer bestimmten Anzahl an Bildpixeln, Mittelung der Helligkeitswerte der Bildpixel der vielen einzelnen Teilflächen und die Kreuzkorrelation zwischen den einzelnen Bildern kann folgendermaßen stattfinden: Die beiden zur Deckung gebrachten Bilder werden in kleinere Flächen (virtuelle Detektoren) unterteilt. Danach wird über die Helligkeitswerte der Pixel innerhalb jeweils eines virtuellen Detektors gemittelt. Für jeden virtuellen Detektor in dem ersten Bild gibt es einen korrespondierenden virtuellen Detektor in dem zeitlich darauf folgenden zweiten Bild. Die Helligkeitsmittelwerte der beiden virtuellen Detektoren werden multipliziert. Danach wird über die Produkte aller virtuellen Detektorpaare der Bilder bzw. eines Teilbereichs davon gemittelt. Dieser Mittelwert ist der Korrelationswert, welcher in der Autokorrelationsfunktion gegen den zeitlichen Versatz zwischen den beiden Sensoraufnahmen, der Korrelationszeit, aufgetragen wird.

Das erfindungsgemäße Verfahren kann dadurch gekennzeichnet sein, dass ein flüssiges Medium eingesetzt wird, das für die Wellenlänge des Laserlichts transparent ist.

Die Partikel können eine mittlere Größe im Nanometerbereich bis Mikrometerbereich, bevorzugt eine mittlere Größe von 1 nm bis 1000 $\mu$m, gemessen mit dynamischer Lichtstreuung, aufweisen.

Die Durchflussküvette kann senkrecht zur Flussrichtung einen Durchmesser aufweisen, der größer ist als der Durchmesser des eingestrahlten Laserlichts. Durch diese Maßnahmen wird ein möglichst kleiner Ausschnitt des parabolischen Flussprofils in der Durchflussküvette beleuchtet und die Partikel im Laserstrahl haben eine möglichst einheitliche Bewegungsgeschwindigkeit.

Der Laser kann das Laserlicht parallel zur Flussrichtung oder in einem Winkel von > 0° bis < 180° (z.B. 90°) zur Flussrichtung einstrahlen. Die Einstrahlung in einem Winkel > 0° bis < 180° zur Flussrichtung hat den Vorteil, dass die Anschlüsse für den Probenzulauf und Probenablauf nicht senkrecht zur Einstrahlrichtung an der Durchflussküvette angeordnet sein müssen (d.h. an deren Längsseite), sondern auch parallel zur Einstrahlrichtung an der Durchflussküvette angeordnet sein können (d.h. an deren Querseite). Dadurch können Verwirbelungen des flüssigen Mediums vermieden werden und auch bei hohen Flussraten ein laminarer Fluss sichergestellt werden. Ferner passiert das Laserlicht bei dieser Variante ein kleineres Probenvolumen und wird somit bei konzentrierten Proben weniger stark abgeschwächt, was die Vermessung auch hochkonzentrierter Proben ermöglicht.

In einer bevorzugten Ausführungsform enthalten die lichtempfindlichen Sensoren und/oder die lichtempfindlichen Sensorfläche einen Sensor, der ausgewählt ist aus der Gruppe bestehend aus CCD-Sensoren, CMOS-APS-Sensoren, Photodiodenarrays, Avalanche-Photodiodenarrays und Kombinationen hiervon, oder besteht daraus. Ein Avalanche-Photodiodenarray hat den Vorteil, dass es eine hohe Detektionssensitivität aufweist.

In der Datenverarbeitungsvorrichtung kann die Bestimmung eines Versatzes und eines Drehwinkel der an den beiden Detektoren gemessenen Signale über ein digitales Bildverarbeitungsverfahren, bevorzugt die "template matching"-Methode, erfolgen.

Die gemessenen Bilder in mehr als 100, bevorzugt mehr als 1000, besonders bevorzugt mehr als 10000, insbesondere mehr als 90000, Teilflächen (virtuelle Detektoren) unterteilt werden. Bevorzugt werden ≤ 4 Pixel zu einer Teilfläche (d.h. zu einem virtuellen Detektor) zusammengefasst.

Die Verzögerungszeit zwischen dem ersten und zweiten Detektor kann weniger als 10 sek., bevorzugt weniger als 1 sek., besonders bevorzugt weniger als 10 msek., insbesondere weniger als 0,1 msek. (optional weniger als 1 $\mu$sek.) betragen.

In Schritt d) des Verfahrens kann ferner eine Bestimmung der Winkelverteilung des Streulichts erfolgen, bevorzugt über Unterteilung der gemessenen Bilder am ersten und/oder zweiten Bildsensor in viele Teilflächen mit jeweils einer bestimmten Anzahl an Bildpixeln, wobei die Unterteilung entlang des Streuwinkels relativ zur Einstrahlrichtung des Lasers erfolgt und anschließend über die gemittelten Helligkeitswerte für jede Teilfläche die Winkelverteilung der Streulichtintensität bestimmt wird. Mit Hilfe der Winkelverteilung kann ebenfalls auf Probeeigenschaften wie zum Beispiel die Partikelgröße, deren Verteilung und die Partikelform geschlossen werden (statische Lichtstreuung).

Zwischen dem Kollimator und der Durchflussküvette kann eine optische Linse, bevorzugt eine sphärische optische Linse angeordnet sein oder werden.

Zwischen der Durchflussküvette und dem Detektor kann

i) mindestens eine optische Linse, bevorzugt mindestens zwei optische Linsen, besonders bevorzugt mindestens drei optische Linsen (sphärisch oder zylindrisch); und/oder

ii) mindestens eine Blende, bevorzugt eine Schlitzblende;

angeordnet sein oder werden, wobei sich die mindestens eine Blende bevorzugt zwischen mindestens zwei optischen Linsen angeordnet ist.

Zwischen der Durchflussküvette und dem Detektor kann

i) mindestens eine zylindrische Sammellinse, bevorzugt mindestens zwei zylindrische Sammellinsen, besonders bevorzugt mindestens zwei zylindrische Sammellinsen mit zueinander senkrecht stehenden Zylinderachsen; und/oder

ii) mindestens eine sphärische Sammellinse; und/oder

iii) mindestens eine Blende, bevorzugt mindestens eine Schlitzblende; angeordnet werden oder angeordnet sein, bevorzugt von Durchflussküvette in Richtung Strahlteiler mindestens zwei zylindrische Sammellinsen oder eine zylindrische Sammellinse, eine sphärische Sammellinse, eine Blende (insbesondere eine Schlitzblende) und eine zylindrische Sammellinse.

Das eingestrahlte und ungestreute Laserlicht kann nach Passieren der Durchflussküvette auf einen Strahlfänger geleitet werden.

Ferner wird erfindungsgemäß eine Vorrichtung zur Bestimmung der mittleren Partikelgröße von Partikeln, die in einem flüssigen und fließenden Medium suspendiert sind, über dynamische Lichtstreuung, bereitgestellt. Die Vorrichtung enthält

a) eine Durchflussküvette zum Leiten von einem flüssigen Medium mit bestimmter Viskosität und bestimmten Brechungsindex, das in suspendierter Form Partikel enthält, in einem laminaren Strom durch eine Durchflussküvette entlang einer Flussrichtung;

b) einen Laser zum Einstrahlen von Laserlicht mit einer bestimmten Wellenlänge in einer Einstrahlrichtung auf ein in der Durchflussküvette befindliches flüssiges Medium, wobei zwischen dem Laser und der Durchflussküvette ein Kollimator angeordnet ist;

c) einen Temperatursensor zur Messung der Temperatur des flüssigen Mediums; und

d) einen Detektor zur Messung der Intensität von gestreutem Laserlicht in Form von Bildern, wobei der Detektor senkrecht zur Flussrichtung und in einem bestimmten Winkel von 10° bis < 180° zur Einstrahlrichtung angeordnet ist und der Detektor

i) einen Strahlteiler enthält, der das gestreute Laserlicht auf einen ersten und einen zweiten lichtempfindlichen Sensor ablenkt, wobei die beiden Sensoren dazu geeignet sind, Bilder mit jeweils einer bestimmten Anzahl an Bildpixeln zu detektieren, und wobei die beiden Sensoren so konfiguriert werden oder sind, dass sie mit einer bestimmten Verzögerungszeit alternierend gestreutes Laserlicht als Bild detektieren; oder

ii) eine Kamera enthält, die eine lichtempfindliche Sensorfläche aufweist, die dazu geeignet ist, Bilder mit jeweils einer bestimmte Anzahl an Bildpixeln zu detektieren, wobei die Sensorfläche so konfiguriert wird oder ist, dass sie mit einer bestimmten Verzögerungszeit zwischen zwei aufeinander folgenden Bildern gestreutes Laserlicht als Bild detektiert;

e) eine Datenverarbeitungsvorrichtung zum Empfang der am Detektor gemessenen Bilder, wobei die Datenverarbeitungsvorrichtung dazu konfiguriert ist, die folgenden Schritte durchzuführen:

1) Normierung der gemessenen Bilder, sodass die gemessene Intensität des Laserlichts (d.h. die Belichtungswerte der Bildpixel) bei allen Bildern den gleichen Mittelwert und die gleiche Standardabweichung erhält;

2) Bestimmung eines Versatzes und eines Drehwinkels von einem Muster auf zumindest einem Teilbereich von einem ersten Bild zu einem Muster auf zumindest einem Teilbereich von einem zeitlich darauf folgenden zweiten Bild und Nutzung dieser Information, um die Muster der beiden Bilder zur Deckung zu bringen;

3) Unterteilung der zur Deckung gebrachten Bilder jeweils in viele einzelne Teilflächen mit jeweils einer bestimmten Anzahl an Bildpixeln und Mittelung der Helligkeitswerte der Bildpixel der vielen einzelnen Teilflächen; und

4) Korrelieren der gemittelten Helligkeitswerte der Bildpixel der vielen einzelnen Teilflächen des ersten Bildes mit den gemittelten Helligkeitswerten der Bildpixel der vielen einzelnen deckungsgleichen Teilflächen des zweiten Bildes (Kreuzkorrelation zwischen den einzelnen Bildern), wobei sich für jedes Paar der zur Deckung gebrachten Teilflächen der Bilder ein Korrelationswert ergibt;

5) Mittelung über alle erhaltenen Korrelationswerte zu einem mittleren Korrelationswert für die beiden Bilder.

Die Vorrichtung ist dadurch gekennzeichnet, dass sie dazu konfiguriert ist, bei einer ersten und mindestens einer zweiten, zur ersten verschiedenen Verzögerungszeit eine Temperatur des flüssigen Mediums und eine Intensität von gestreutem Licht in Form von Bildern zu messen, aus den hierbei jeweils durch die Datenverarbeitungsvorrichtung erhaltenen, gemittelten Korrelationswerten eine Autokorrelationsfunktion anzugeben und anhand der Autokorrelationsfunktion, der gemessenen Temperatur des flüssigen Mediums, der Viskosität und dem Brechungsindex des flüssigen Mediums, der Wellenlänge des Laserlichts dem Winkel des Detektors die mittlere Partikelgröße zu bestimmen.

Der Vorteil der erfindungsgemäßen Vorrichtung ist die einfache Justage ihrer Komponenten (z.B. des Lasers und/oder der Bildsensoren), da diese nicht mirkometergenau positioniert werden müssen.

In der Vorrichtung kann die Durchflussküvette senkrecht zur Flussrichtung einen Durchmesser aufweisen, der größer ist als der Durchmesser des eingestrahlten Laserlichts.

Der Laser kann so angeordnet sein, dass das Laserlicht parallel zur Flussrichtung oder in einem Winkel von > 0° bis < 180° (z.B. 90°) zur Flussrichtung einstrahlt. Die Einstrahlung in einem Winkel > 0 ° bis < 180 ° zur Flussrichtung hat den Vorteil, dass die Anschlüsse für den Probenzulauf und Probenablauf nicht senkrecht zur Einstrahlrichtung an der Durchflussküvette angeordnet sein müssen (d.h. an deren Längsseite), sondern auch parallel zur Einstrahlrichtung an der Durchflussküvette angeordnet sein können (d.h. an deren Querseite). Dadurch können Verwirbelungen des flüssigen Mediums vermieden werden und auch bei hohen Flussraten ein laminarer Fluss sichergestellt werden. Ferner passiert das Laserlicht bei dieser Variante ein kleineres Probenvolumen der Durchflussküvette und wird somit bei konzentrierten Proben weniger stark abgeschwächt, was die Vermessung auch hochkonzentrierter Proben ermöglicht.

Die lichtempfindlichen Sensoren und/oder die lichtempfindlichen Sensorfläche kann einen Sensor enthalten oder daraus bestehen, der ausgewählt ist aus der Gruppe bestehend aus CCD-Sensoren, CMOS-APS-Sensoren, Photodiodenarrays, Avalanche-Photodiodenarrays und Kombinationen hiervon.

Die Vorrichtung kann dadurch gekennzeichnet sein, dass die Datenverarbeitungsvorrichtung so konfiguriert ist, dass die Bestimmung des Versatzes und des Drehwinkel der an den beiden Detektoren gemessenen Signale über ein digitales Bildverarbeitungsverfahren, bevorzugt über die "template matching"-Methode, erfolgt.

Die Datenverarbeitungsvorrichtung der Vorrichtung kann so konfiguriert sein, die gemessenen Bilder in mehr als 100, bevorzugt mehr als 1000, besonders bevorzugt mehr als 10000, insbesondere mehr als 90000, Teilflächen zu unterteilen.

In einer bevorzugten Ausgestaltungsform ist der erste und der zweite Detektor so eingestellt, dass die Verzögerungszeit zwischen dem ersten und zweiten Detektor weniger als 10 sek., bevorzugt weniger als 1 sek., besonders bevorzugt weniger als 10 msek., insbesondere weniger als 0,1 msek. (optional weniger als 1 µsek.),

beträgt.

Die Vorrichtung kann ferner dazu konfiguriert sein, eine Bestimmung der Winkelverteilung des Streulichts durchzuführen, bevorzugt über eine Unterteilung der gemessenen Bilder am ersten und/oder zweiten Bildsensor in viele Teilflächen mit jeweils einer bestimmten Anzahl an Bildpixeln, wobei die Unterteilung entlang des Streuwinkels relativ zur Einstrahlrichtung des Lasers erfolgt und anschließend über die gemittelten Helligkeitswerte für jede Teilfläche die Winkelverteilung der Streulichtintensität bestimmt wird.

In der Vorrichtung kann zwischen dem Kollimator und der Durchflussküvette eine optische Linse, bevorzugt eine sphärische optische Linse angeordnet sein.

In der Vorrichtung kann zwischen der Durchflussküvette und dem Detektor

    i) mindestens eine optische Linse, bevorzugt mindestens zwei optische Linsen, besonders bevorzugt mindestens drei optische Linsen (sphärisch oder zylindrisch); und/oder

    ii) mindestens eine Blende, bevorzugt eine Schlitzblende;

angeordnet sein, wobei sich die mindestens eine Blende bevorzugt zwischen mindestens zwei optischen Linsen angeordnet ist.

In einer bevorzugten Ausgestaltungsform ist in der Vorrichtung zwischen der Durchflussküvette und dem Detektor

    i) mindestens eine zylindrische Sammellinse, bevorzugt mindestens zwei zylindrische Sammellinsen, besonders bevorzugt mindestens zwei zylindrische Sammellinsen mit zueinander senkrecht stehenden Zylinderachsen; und/oder

    ii) mindestens eine sphärische Sammellinse; und/oder

    iii) mindestens eine Blende, bevorzugt mindestens eine Schlitzblende;

angeordnet, bevorzugt von Durchflussküvette in Richtung Strahlteiler mindestens zwei zylindrische Sammellinsen oder eine zylindrische Sammellinse, eine sphärische Sammellinse, eine Blende (insbesondere eine Schlitzblende) und eine zylindrische Sammellinse.

Die Vorrichtung kann einen Strahlfänger enthalten, der so angeordnet ist, dass eingestrahltes und ungestreutes Laserlicht nach Passieren der Durchflussküvette auf ihn auftrifft.

Die Vorrichtung kann ein Teil einer Vorrichtung zur Nanopartikelproduktion sein. In dieser Ausgestaltungsform können die produzierten Nanopartikel "inline" vermessen werden.

Ferner kann die Vorrichtung eine tragbare Vorrichtung sein.

Anhand der nachfolgenden Figuren und Beispiele soll der erfindungsgemäße Gegenstand näher erläutert werden, ohne diesen auf die hier dargestellten, spezifischen Ausführungsformen einschränken zu wollen.

Bezugszeichenliste

1: Laser
2: Kollimator
3: dritte zylindrische optische Linse
4: Durchflussküvette
5: Strahlfänger
6: erste zylindrische optische Linse (Sammellinse)
7: zweite zylindrische optische Linse (Sammellinse)
8: Strahlteiler
9: lichtempfindlicher Sensor bzw. lichtempfindliche Sensoren
10: Schlitzblende
11: vierte zylindrische optische Linse (Sammellinse)
12: sphärische optische Linse

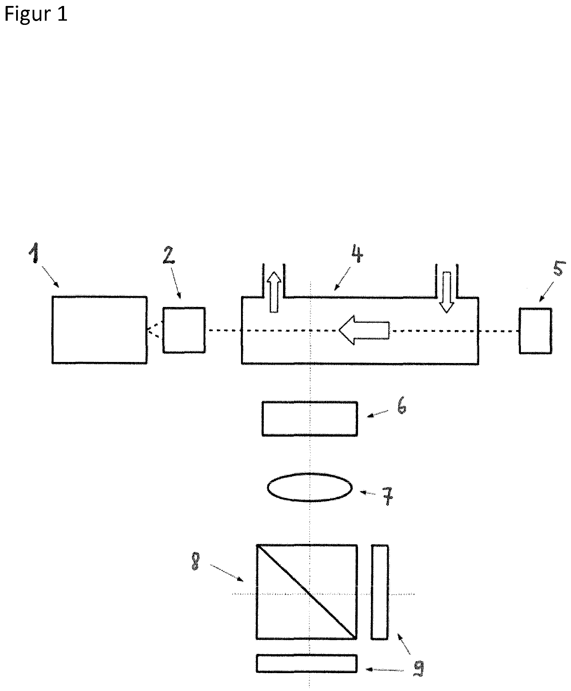

Figur 1 zeigt schematisch den Aufbau einer erfindungsgemäßen Vorrichtung mit zwei Bildsensoren in der Draufsicht. Die Vorrichtung enthält einen Laser 1 als Strahlungsquelle, einen Kollimator 2 zur Formung des Laserstrahls in eine Einstrahlrichtung, eine zylindrische Durchflussküvette 4, die an den Grundflächen plane Fenster aufweist, und einen Strahlfänger 5, auf den ungestreutes Laserlicht auftreffen kann. Senkrecht zur Einstrahlrichtung enthält die Vorrichtung eine erste optische Zylinderlinse 6, eine zweite optische Zylinderlinse 7, einen Strahlteiler 8 und zwei Bildsensoren 9. Die beiden optischen Zylinderlinsen 6, 7 bilden die Sensoroptik, wobei die Zylinderachse der ersten optischen Linse 6 parallel zur Flussrichtung der Probe ist und die Zylinderachse der zweiten optischen Zylinderlinse 7 senkrecht zur Zylinderachse der ersten optischen Linse 6 steht. Ferner enthält die Vorrichtung einen Temperatursensor und eine elektronische Steuerung. Die elektronische Steuerung ist geeignet, Informationen der Bildsensoren 9 und des Temperatursensors zu verarbeiten, die Bildsensoren zu konfigurieren und deren Belichtung auszulösen. Ferner kann die elektronische Steuerung geeignet sein, den Laser (z.B. in einer bestimmten Frequenz) einzuschalten und auszuschalten. Die Vorrichtung enthält ferner eine Elektronik zur Weiterleitung der Daten an einen PC. Die Bildsensoren 9 sind so an den Ausgängen des Strahlteilers 8 angebracht, dass sie äquivalente Raumwinkelbereiche des in den Strahlteiler 8 einfallenden Lichts abdecken. Sie müssen jedoch nicht auf den Pixel genau justiert sein. Die Bilder werden während der Messung durch die Software nachjustiert. Der Laser 1 ist so positioniert, dass das Laserlicht den Kollimator 2 durchquert und in die Durchflussküvette 4 strahlt. Das Streuvolumen in der Durchflussküvette 4 wird durch den Strahl des Lasers 1 und die Objektebene der Sensoroptik aufgespannt. Die Probe kann somit laminar parallel zur Objektebene der Sensoroptik durch das Streuvolumen fließen, wodurch sich alle Volumenelemente der laminar fließenden Probe mit einer annähernd einheitlichen Geschwindigkeit bewegen ohne sich zu verformen. Die darin enthaltenen Partikel ändern im Idealfall ausschließlich durch Brownsche Bewegung ihre relativen Abstände untereinander. Die Sensoroptik bildet das Streulicht aus Volumenbereichen des Streuvolumens in der Durchflussküvette 4 auf Flächenbereiche der Bildsensoren 9 ab. Dabei überlappt sich das Streulicht der verschiedenen Volumenbereichen nur peripher. Das Licht des Lasers 1 (markiert durch die dicke gestrichelte Linie) wird mit Hilfe einer Kollimators 2 zu einem möglichst dünnen Strahl kollimiert und entlang der Zylinderachse mittig durch die Durchflussküvette 4 gestrahlt. Die Probe fließt in die Durchflussküvette 4, dann parallel zur Strahlrichtung des Laserlichts, und dann wieder heraus. Die Flussrichtung (markiert durch Pfeile) ist hier parallel zu den Lichtstrahlen des Lasers 1. Da die Durchflussküvette 4 wesentlich breiter ist als der Laserstrahl, erfasst das Streuvolumen nur einen sehr kleinen Teil des Flussprofils innerhalb der Durchflussküvette 4. Die Partikel im Streuvolumen bewegen sich deshalb mit einer annähernd einheitlichen Geschwindigkeit. Senkrecht zur Laserrichtung befindet sich die Achse der Sensoroptik (dünne gestrichelte Linie). Der Strahlteiler 8 und die beiden Sensoren 9 liegen hinter einer ersten und einer zweiten optischen Linse, welche die Optik für das Streulicht bilden. Die erste optische Zylinderlinse 6 erzeugt keine Abbildung nach Linsengesetz, denn sie konzentriert lediglich das Streulicht aus der Durchflussküvette 4 auf die Sensoren 9 (Wirkung einer Sammellinse). Die zweite zylindrische optische Linse 7 erzeugt eine Abbildung des Streuvolumens auf die beiden Sensoren 9. Das kohärente Streulicht aus einem Abschnitt innerhalb des Streuvolumens kann so auf dem Sensor 9 innerhalb eines streifenförmigen Flächenbereichs interferieren.

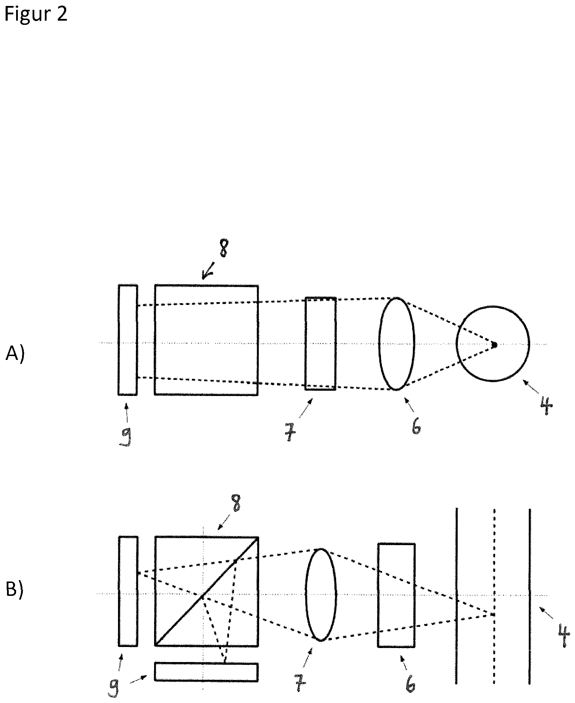

Figur 2 zeigt schematisch den Weg des Streulichts in einem Aufbau einer erfindungsgemäßen Vorrichtung gemäß Figur 1. In Fig. 2A ist die Seitenansicht auf die Vorrichtung dargestellt während Fig. 2B die Draufsicht auf die Vorrichtung zeigt. Ausgehend von der Durchflussküvette 4 passiert das Streulicht eine erste optische Zylinderlinse 6, eine zweite optische Zylinderlinse 7 und dann den Strahlteiler 8, von dem es auf die beiden Sensoren 9 abgelenkt wird.

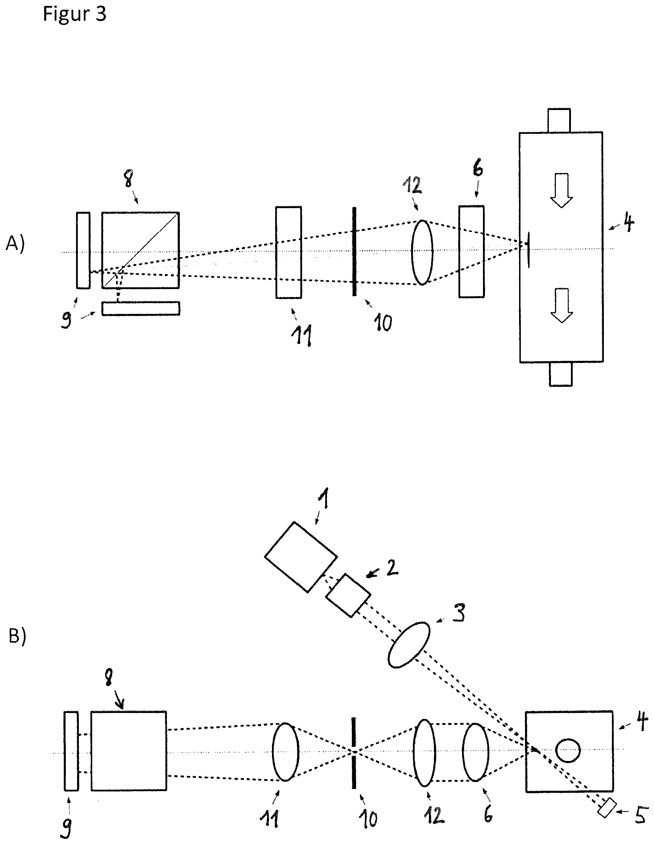

Figur 3 zeigt schematisch den Aufbau einer erfindungsgemäßen Vorrichtung mit zwei Bildsensoren und einer quaderförmigen Durchflussküvette in Draufsicht (Fig. 3A) und in der Seitenansicht (Fig. 3B). Die Durchflussküvette 4 hat ein Fenster zum Einstrahlen der Lichtstrahlen des Lasers 1 und ein Fenster zum Austreten des ungestreuten Laserlichts in den Strahlfänger 5. Der Zu- und Ablauf für die Probe (d.h. das flüssige Medium mit suspendierten Partikeln) befinden sich an den Stirnseiten der Durchflussküvette 4 (d.h. ein Fenster für den Eintritt des Laserlichtstrahls und gleichzeitig den Austritt des Streulichts, und ein Fenster für den Austritt des Laserlichtstrahls in Richtung Strahlfänger 5.). In Figur 3B ist zudem der Laser 1 dargestellt. Durch den Laser 1 emittiertes Licht passiert erst einen Kollimator 2 und wird danach von einer dritten optischen Zylinderlinse 3 mit großer Brennweite im Randbereich der Durchflussküvette 4 (bevorzugt direkt hinter dem Fenster) fokussiert. Der längliche Fokusbereich des Laserlichts in der Durchflussküvette 4 ist als schwarzer Bereich markiert und wird im Folgenden als "Fokuslinie" bezeichnet. Die Fokuslinie verläuft parallel zur Flussrichtung der Probe (Flussrichtung ist durch Pfeile in der Durchflussküvette 4 dargestellt). Die Ausbreitungsrichtung des Laserlichts ist in dieser Ausgestaltungsform senkrecht zur Flussrichtung der Probe durch die Durchflussküvette 4 (und nicht parallel hierzu wie in der Ausgestaltungsform gemäß Figur 1). Ein Teil des Streulichts aus dem Fokusbereich tritt seitlich aus der Durchflussküvette 4 aus dem Fenster aus passiert die Sensoroptik und trifft auf die Sensoren 9. Der Weg des Streulichts in dieser Ausgestaltungsform ist sowohl in Fig. 3A als auch in Fig. 3B dargestellt. In diesen Figuren wird deutlich, dass das gestreute Licht zunächst eine erste optische Zylinderlinse 6 und dann eine sphärische optische Linse 12 passiert. Nach diesen beiden optischen Linsen 6, 12 passiert das Licht eine Schlitzblende 10 und anschließend eine vierte zylindrische optische Linse 11. Nach dieser vierten zylindrischen optischen Linse 11 trifft das Licht auf den Strahlteiler 8 und wird dort auf die beiden Bildsensoren 9 abgelenkt. Die optische Achse der Sensoroptik, dargestellt durch eine dünne gestrichelte Linie, steht senkrecht auf der Fokuslinie des Lasers 1. Durch die Positionen der Schlitzblende 10 und der Fokuslinie wird die Größe und die Position des Streuvolumens festgelegt. Hierbei lässt die Schlitzblende 10, je nach Schlitzbreite und Schlitzposition, nur das Licht aus einem kleinen Raumbereich bis zu den Sensoren 9 durch. Das Schnittvolumen aus diesem Raumbereich und der Fokuslinie ist das Streuvolumen. Da die Durchflussküvette 4 wesentlich breiter ist als der Durchmesser des Streuvolumens, erfasst dieses nur einen sehr kleinen Teil des Flussprofils. Die Partikel im Streuvolumen bewegen sich deshalb mit einer annähernd einheitlichen Geschwindigkeit. Die erste optische Linse 6 fängt Streulicht mit einer Intensitätsverteilung, abhängig von dem Winkel relativ zur Ausbreitungsrichtung der Laserstrahlung, auf. Diese Verteilung wird dann durch die restlichen optischen Elemente auf die Sensoren 9 projiziert. In der orthogonalen Raumrichtung (= Bildebene der Draufsicht) erfolgt eine Abbildung des Streuvolumens auf die Oberfläche der Sensoren 9. In dieser Richtung haben die beiden optischen Linsen 6, 11 und die Schlitzblende 10 keine Funktion. In Figur 3A ist der Strahlengang der Abbildung eines Streuvolumenelements auf die Sensoren 9 durch eine gestrichelte Linie eingezeichnet. Da die Abbildung nur entlang einer Raumrichtung stattfindet, kann das Streulicht aus einem Abschnitt des Streuvolumens auf einem streifenförmigen Flächenabschnitt auf dem Sensor 9 interferieren.

**Beispiel 1 - Aufbau einer erfindungsgemäßen Vorrichtung und Erläuterung Ihrer Funktionsweise**

Eine erfindungsgemäße Vorrichtung enthält einen Laser, einen Kollimator, eine Durchflussküvette, eine erste optische Linse, eine zweite optische Linse, einen Strahlteiler und zwei lichtempfindliche Sensoren. Eine Probe d.h. ein flüssiges Medium mit suspendierten Partikeln wird durch die Durchflussküvette geleitet, wobei sich die Probe und damit die suspendierten Partikel entlang der Objektebene der Sensoroptik durch das Streuvolumen bewegen. Das durch die bewegten, suspendierten Partikeln erzeugte Streulicht erzeugt ein optisches Bild auf dem jeweiligen Sensor. Weil das Streulicht kohärent ist, erzeugt es auf der Bildsensoroberfläche ein Interferenzmuster.

Die in einem Volumenelement der Probe innerhalb des Streuvolumens enthaltenen Partikel werden durch den Fluss nicht in ihren relativen Abständen beeinflusst. Weil das flüssige Medium (das "Lösungsmittel") jedoch der Brownschen Molekularbewegung unterliegt, verändern sich die relativen Abstände zwischen den Partikeln mit der Zeit. Gleichzeitig bewegt der Fluss alle Partikel im Streuvolumen mit einer einheitlichen Geschwindigkeit in dieselbe Richtung. Aus diesem Grund bewegt sich das Interferenzmuster, wegen des Flusses, über den Sensor und macht währenddessen, wegen der zeitabhängigen Änderung der relativen Partikelabstände, eine zeitliche Entwicklung durch. Die beiden Sensoren der Vorrichtung erstellen zeitlich nacheinander (alternierend) ein Bild des Musters. Die Interferenzmuster von zwei aufeinanderfolgenden Bildern sind zueinander um die Verschiebung durch den Fluss und um die Abweichung der beiden Sensorpositionen am Strahlteiler verschoben bzw. gedreht. Das zeitlich später aufgenommene Bild weist ferner aufgrund der Brownschen Molekularbewegung zusätzliche Abweichungen auf.

Die Bilder werden nach ihrer Aufnahme an dem jeweiligen Sensor zu einer Datenverarbeitungsvorrichtung (z.B. zu einem PC) transferiert. Nach dem Transfer zu einem PC werden die Bilder zunächst durch eine Software normiert. Dabei werden der Mittelwert und die Standardabweichung der Belichtungswerte bei allen Bildern einer Messung auf die gleichen Werte gesetzt.

Danach wird mit Hilfe eines digitalen Bildbearbeitungsverfahrens (z.B. mit der sog. "template matching"-Methode) der Versatz und der Drehwinkel beider Bilder relativ zueinander bestimmt. Sind die relativen Positionen bekannt, so lassen sich die Bilder (d.h. die Interferenzmuster) zur Deckung bringen und ein Korrelationswert kann berechnet werden. Der Fluss der Probe und die Abweichungen in den Positionen der Bildsensoren am Strahlteiler werden somit durch die Software ausgeglichen.

Die Bilder werden anschließend in viele kleinere Flächen unterteilt und die Helligkeitswerte der Pixel darin jeweils gemittelt. Die so errechneten Helligkeitswerte dieser "virtuellen Detektoren" auf beiden Bildern werden korreliert (Kreuzkorrelation) und danach über alle Korrelationswerte der Bilder gemittelt. Es werden mehrere Messungen mit verschiedenen Verzögerungszeiten durchgeführt. Aus deren Korrelationswerten kann die Autokorrelationsfunktion und darüber die mittlere Partikelgröße in der Probe bestimmt werden. Dies geschieht ebenfalls über die Datenverarbeitungsvorrichtung.

Während der Messungen werden die Temperaturwerte der Probe gespeichert. Aus den gemessenen Werten für Korrelation und Temperatur und denen als bekannt vorausgesetzten Eigenschaften der Probe, wie die Viskosität und dem Brechungsindex des flüssigen Mediums, der Wellenlänge des Laserlichts dem Winkel des Detektors, kann nun der mittlere hydrodynamische Radius in der Probe, bestimmt werden. Die erfindungsgemäße Vorrichtung hat den Vorteil, dass die Flussgeschwindigkeit der Probe nicht in die Berechnung des hydrodynamischen Radius einfließt, also die Berechnung unabhängig von der Flussgeschwindigkeit ist.

**Beispiel 2 - Aufbau einer erfindungsgemäßen Vorrichtung mit einer Kamera statt zwei Sensoren mit Strahlteiler**

Hier werden die Bildsensoren und der Strahlteiler aus Beispiel 1 und den Figuren 1 bis 3 durch eine Kamera ersetzt. Der Rest ist identisch mit der in Beispiel 1 und den Figuren 1 bis 3 vorgestellten Vorrichtung. Anstatt die Bilder der beiden Sensoren am Strahlteiler zu verarbeiten, werden in dieser Variante zwei nacheinander aufgenommene Bilder der Kamera verwendet.

**Patentansprüche**

1. Verfahren zur Bestimmung der mittleren Partikelgröße von Partikeln, die in einem flüssigen und fließenden Medium suspendiert sind, über dynamische Lichtstreuung, umfassend die Schritte

a) Leiten von einem flüssigen Medium mit bestimmter Viskosität und bestimmten Brechungsindex, das in suspendierter Form Partikel enthält in einem laminaren Strom durch eine Durchflussküvette (4) entlang einer Flussrichtung;
b) Einstrahlen von Laserlicht einer bestimmten Wellenlänge in einer Einstrahlrichtung auf das flüssige Medium über einen Laser (1), wobei zwischen dem Laser (1) und der Durchflussküvette (4) ein Kollimator (2) angeordnet ist;
c) Messung der Temperatur des flüssigen Mediums;
d) Messung der Intensität von gestreutem Laserlicht über einen Detektor in Form von Bildern, wobei der Detektor senkrecht zur Flussrichtung und in einem bestimmten Winkel von 10° bis < 180° zur Einstrahlrichtung angeordnet ist und der Detektor

i) einen Strahlteiler (8) enthält, der das gestreute Laserlicht auf einen ersten und einen zweiten lichtempfindlichen Sensor (9) ablenkt,
wobei die beiden lichtempfindlichen Sensoren (9) dazu geeignet sind, Bilder mit jeweils einer bestimmten Anzahl an Bildpixeln zu detektieren, und wobei die beiden lichtempfindlichen Sensoren (9) so konfiguriert sind, dass sie mit einer bestimmten Verzögerungszeit alternierend gestreutes Laserlicht als Bild detektieren; oder
ii) eine Kamera enthält, die eine lichtempfindliche Sensorfläche aufweist, die dazu geeignet ist, Bilder mit jeweils einer bestimmte Anzahl an Bildpixeln zu detektieren, wobei die lichtempfindliche Sensorfläche so konfiguriert ist, dass sie mit einer bestimmten Verzögerungszeit zwischen zwei aufeinander folgenden Bildern gestreutes Laserlicht als Bild detektiert; und

e) Übermitteln der am Detektor gemessenen Bilder an eine Datenverarbeitungsvorrichtung, wobei die Datenverarbeitungsvorrichtung die folgenden Schritte durchführt:

1) Normierung der gemessenen Bilder, sodass die gemessene Intensität des Laserlichts bei allen Bildern den gleichen Mittelwert und die gleiche Standardabweichung erhält;
2) Bestimmung eines Versatzes und eines Drehwinkels von einem Muster auf zumindest einem Teilbereich von einem ersten Bild zu einem Muster auf zumindest einem Teilbereich von einem zeitlich darauf folgenden zweiten Bild und Nutzung dieser Information, um die Muster der beiden Bilder zur Deckung zu bringen;
3) Unterteilung der zur Deckung gebrachten Bilder jeweils in viele einzelne Teilflächen mit jeweils einer bestimmten Anzahl an Bildpixeln und Mittelung der Helligkeitswerte der Bildpixel der vielen einzelnen Teilflächen; und
4) Korrelieren der gemittelten Helligkeitswerte der Bildpixel der vielen einzelnen Teilflächen des ersten Bildes mit den gemittelten Helligkeitswerten der Bildpixel der vielen einzelnen deckungsgleichen Teilflächen des zweiten Bildes, wobei sich für jedes Paar der zur Deckung gebrachten Teilflächen der beiden Bilder ein Korrelationswert ergibt;
5) Mittelung über alle erhaltenen Korrelationswerte zu einem mittleren Korrelationswert für die beiden Bilder;

wobei die Schritte c) bis d) bei mindestens einer ersten und einer zweiten, zur ersten verschiedenen Verzögerungszeit durchgeführt werden, aus den hierbei jeweils in Schritt e) erhaltenen, gemittelten Korrelationswerten eine Autokorrelationsfunktion angegeben wird und anhand der Autokorrelationsfunktion, der gemessenen Temperatur des flüssigen Mediums, der Viskosität und dem Brechungsindex des flüssigen Mediums, der Wellenlänge des Laserlichts und dem Winkel des Detektors die mittlere Partikelgröße bestimmt wird.

2. Verfahren gemäß Anspruch 1, **dadurch gekennzeichnet, dass**

    i) ein flüssiges Medium eingesetzt wird, das für die Wellenlänge des Laserlichts transparent ist; und/oder
    ii) die Partikel eine mittlere Größe im Nanometerbereich bis Mikrometerbereich, bevorzugt eine mittlere Größe von 1 nm bis 1000 μm, gemessen mit dynamischer Lichtstreuung, aufweisen.

3. Verfahren gemäß einem der vorhergehenden Ansprüche, **dadurch gekennzeichnet, dass** die Durchflussküvette senkrecht zur Flussrichtung einen Durchmesser aufweist, der größer ist als der Durchmesser des eingestrahlten Laserlichts.

4. Verfahren gemäß einem der vorhergehenden Ansprüche, **dadurch gekennzeichnet, dass** die lichtempfindlichen Sensoren und/oder die lichtempfindlichen Sensorfläche einen Sensor enthält oder daraus besteht, der ausgewählt ist aus der Gruppe bestehend aus CCD-Sensoren, CMOS-APS-Sensoren, Photodiodenarrays, Avalanche-Photodiodenarrays und Kombinationen hiervon.

5. Verfahren gemäß einem der vorhergehenden Ansprüche, **dadurch gekennzeichnet, dass**

    i) in der Datenverarbeitungsvorrichtung die Bestimmung eines Versatzes und eines Drehwinkel der an den beiden Detektoren gemessenen Signale über ein digitales Bildverarbeitungsverfahren, bevorzugt die "template matching"-Methode, erfolgt; und/oder
    ii) die gemessenen Bilder in mehr als 100, bevorzugt mehr als 1000, besonders bevorzugt mehr als 10000, insbesondere mehr als 90000, Teilflächen unterteilt werden.

6. Verfahren gemäß einem der vorhergehenden Ansprüche, **dadurch gekennzeichnet, dass** die Verzögerungszeit zwischen dem ersten und zweiten Detektor weniger als 10 s, bevorzugt weniger als 1 s, besonders bevorzugt weniger als 10 ms, insbesondere weniger als 0,1 ms, beträgt.

7. Verfahren gemäß einem der vorhergehenden Ansprüche, **dadurch gekennzeichnet, dass** in Schritt d) ferner eine Bestimmung der Winkelverteilung des Streulichts erfolgt, bevorzugt über Unterteilung der gemessenen Bilder am ersten und/oder zweiten Bildsensor in viele Teilflächen mit jeweils einer bestimmten Anzahl an Bildpixeln, wobei die Unterteilung entlang des Streuwinkels relativ zur Einstrahlrichtung des Lasers erfolgt und anschließend über die gemittelten Helligkeitswerte für jede Teilfläche die Winkelverteilung der Streulichtintensität bestimmt wird.

8. Verfahren gemäß einem der vorhergehenden Ansprüche, **dadurch gekennzeichnet, dass** zwischen Durchflussküvette und Detektor

    i) mindestens eine zylindrische Sammellinse, bevorzugt mindestens zwei zylindrische Sammellinsen, besonders bevorzugt mindestens zwei zylindrische Sammellinsen mit zueinander senkrecht stehenden Zylinderachsen; und/oder
    ii) mindestens eine sphärische Sammellinse; und/oder
    iii) mindestens eine Blende, bevorzugt mindestens eine Schlitzblende; angeordnet wird oder angeordnet ist, bevorzugt von Durchflussküvette in Richtung Strahlteiler mindestens zwei zylindrische Sammellinsen oder eine zylindrische Sammellinse, eine sphärische Sammellinse, eine Blende und eine zylindrische Sammellinse.

9. Vorrichtung zur Bestimmung der mittleren Partikelgröße von Partikeln, die in einem flüssigen und fließenden Medium suspendiert sind, über dynamische Lichtstreuung, enthaltend

    a) eine Durchflussküvette (4) zum Leiten von einem flüssigen Medium mit bestimmter Viskosität und bestimmtem Brechungsindex, das in suspendierter Form Partikel enthält, in einem laminaren Strom entlang einer Flussrichtung;
    b) einen Laser (1) zum Einstrahlen von Laserlicht einer bestimmten Wellenlänge in einer Einstrahlrichtung auf ein in der Durchflussküvette (4) befindliches flüssiges Medium, wobei zwischen dem Laser (1) und der Durchflussküvette (4) ein Kollimator (2) angeordnet ist;
    c) einen Temperatursensor zur Messung der Temperatur des flüssigen Mediums; und
    d) einen Detektor zur Messung der Intensität von gestreutem Laserlicht in Form von Bildern, wobei der Detektor senkrecht zur Flussrichtung und in einem bestimmten Winkel von 10° bis < 180° zur Einstrahlrichtung angeordnet ist und der Detektor

i) einen Strahlteiler (8) enthält, der das gestreute Laserlicht auf einen ersten und einen zweiten lichtempfindlichen Sensor (9) ablenkt, wobei die beiden lichtempfindlichen Sensoren (9) dazu geeignet sind, Bilder mit jeweils einer bestimmten Anzahl an Bildpixeln zu detektieren,
und wobei die beiden lichtempfindlichen Sensoren (9) so konfiguriert sind, dass sie mit einer bestimmten Verzögerungszeit alternierend gestreutes Laserlicht als Bild detektieren; oder
ii) eine Kamera enthält, die eine lichtempfindliche Sensorfläche aufweist, die dazu geeignet ist, Bilder mit jeweils einer bestimmte Anzahl an Bildpixeln zu detektieren, wobei die lichtempfindliche Sensorfläche so konfiguriert ist, dass sie mit einer bestimmten Verzögerungszeit zwischen zwei aufeinander folgenden Bildern gestreutes Laserlicht als Bild detektiert;

e) eine Datenverarbeitungsvorrichtung zum Empfang der am Detektor gemessenen Bilder, wobei die Datenverarbeitungsvorrichtung dazu konfiguriert ist, die folgenden Schritte durchzuführen:

1) Normierung der gemessenen Bilder, sodass die gemessene Intensität des Laserlichts bei allen Bildern den gleichen Mittelwert und die gleiche Standardabweichung erhält;
2) Bestimmung eines Versatzes und eines Drehwinkels von einem Muster auf zumindest einem Teilbereich von einem ersten Bild zu einem Muster auf zumindest einem Teilbereich von einem zeitlich darauf folgenden zweiten Bild und Nutzung dieser Information, um die Muster der beiden Bilder zur Deckung zu bringen;
3) Unterteilung der zur Deckung gebrachten Bilder jeweils in viele einzelne Teilflächen mit jeweils einer bestimmten Anzahl an Bildpixeln und Mittelung der Helligkeitswerte der Bildpixel der vielen einzelnen Teilflächen; und
4) Korrelieren der gemittelten Helligkeitswerte der Bildpixel der vielen einzelnen Teilflächen des ersten Bildes mit den gemittelten Helligkeitswerten der Bildpixel der vielen einzelnen deckungsgleichen Teilflächen des zweiten Bildes, wobei sich für jedes Paar der zur Deckung gebrachten Teilflächen der beiden Bilder ein Korrelationswert ergibt;
5) Mittelung über alle erhaltenden Korrelationswerte zu einem mittleren Korrelationswert für die beiden Bilder;

wobei die Vorrichtung dazu konfiguriert ist, bei einer ersten und mindestens einer zweiten, zur ersten verschiedenen Verzögerungszeit eine Temperatur des flüssigen Mediums und eine Intensität von gestreutem Laserlicht in Form von Bildern zu messen, aus den hierbei jeweils durch die Datenverarbeitungsvorrichtung erhaltenen, gemittelten Korrelationswerten eine Autokorrelationsfunktion anzugeben und anhand der Autokorrelationsfunktion, der gemessenen Temperatur des flüssigen Mediums, der Viskosität und dem Brechungsindex des flüssigen Mediums, der Wellenlänge des Laserlichts dem Winkel des Detektors die mittlere Partikelgröße zu bestimmen.

**10.** Vorrichtung gemäß Anspruch 9, **dadurch gekennzeichnet, dass** die Durchflussküvette senkrecht zur Flussrichtung einen Durchmesser aufweist, der größer ist als der Durchmesser des eingestrahlten Laserlichts.

**11.** Vorrichtung gemäß einem der Ansprüche 9 oder 10, **dadurch gekennzeichnet, dass** die lichtempfindlichen Sensoren und/oder die lichtempfindlichen Sensorfläche einen Sensor enthält oder daraus besteht, der ausgewählt ist aus der Gruppe bestehend aus CCD-Sensoren , CMOS-APS-Sensoren, Photodiodenarrays, Avalanche-Photodiodenarrays und Kombinationen hiervon.

**12.** Vorrichtung gemäß einem der Ansprüche 9 bis 11, **dadurch gekennzeichnet, dass** die Datenverarbeitungsvorrichtung so konfiguriert ist,

i) dass die Bestimmung des Versatzes und des Drehwinkel der an den beiden Detektoren gemessenen Signale über ein digitales Bildverarbeitungsverfahren, bevorzugt über die "template matching"-Methode, erfolgt; und/oder
ii) die gemessenen Bilder in mehr als 100, bevorzugt mehr als 1000, besonders bevorzugt mehr als 10000, insbesondere mehr als 90000, Teilflächen zu unterteilen.

**13.** Vorrichtung gemäß einem der Ansprüche 9 bis 12, **dadurch gekennzeichnet, dass** der erste und der zweite Detektor so eingestellt sind, dass die Verzögerungszeit zwischen dem ersten und zweiten Detektor weniger als 10 s, bevorzugt weniger als 1 s, besonders bevorzugt weniger als 10 ms, insbesondere weniger als 0,1 ms, beträgt.

**14.** Vorrichtung gemäß einem der Ansprüche 9 bis 13, **dadurch gekennzeichnet, dass** die Vorrichtung ferner dazu konfiguriert ist, eine Bestimmung der Winkelverteilung des Streulichts durchzuführen, bevorzugt über eine Unterteilung der gemessenen Bilder am ersten und/oder zweiten Bildsensor in viele Teilflächen mit jeweils einer bestimmten Anzahl an Bildpixeln, wobei die Unterteilung entlang des Streuwinkels relativ zur Einstrahlrichtung des Lasers erfolgt und anschließend über die gemittelten Helligkeitswerte für jede Teilfläche die Winkelverteilung der Streulichtintensität bestimmt wird.

15. Vorrichtung gemäß einem der Ansprüche 9 bis 14, **dadurch gekennzeichnet, dass** zwischen Durchflussküvette und Detektor

    i) mindestens eine zylindrische Sammellinse, bevorzugt mindestens zwei zylindrische Sammellinsen, besonders bevorzugt mindestens zwei zylindrische Sammellinsen mit zueinander senkrecht stehenden Zylinderachsen; und/oder
    ii) mindestens eine sphärische Sammellinse; und/oder
    iii) mindestens eine Blende, bevorzugt mindestens eine Schlitzblende; angeordnet ist, bevorzugt von Durchflussküvette in Richtung Strahlteiler mindestens zwei zylindrische Sammellinsen oder eine zylindrische Sammellinse, eine sphärische Sammellinse, eine Blende und eine zylindrische Sammellinse.

## Claims

1. Method for determining the average particle size of particles, which are suspended in a liquid and flowing medium, via dynamic light scattering, comprising the steps

    a) conducting a liquid medium with specific viscosity and specific refractive index, which comprises particles in suspended form, in a laminar flow through a throughflow cuvette (4) along a flow direction;
    b) radiation of laser light of a specific wavelength in a radiation direction onto the liquid medium via a laser (1), a collimator (2) being disposed between the laser (1) and the throughflow cuvette (4);
    c) measuring the temperature of the liquid medium;
    d) measuring the intensity of scattered laser light, via a detector, in the form of images, the detector being disposed perpendicular to the flow direction and at a specific angle of 10° to < 180° relative to the radiation direction, and the detector

        i) comprising a beam splitter (8) which deflects the scattered laser light onto a first and a second light-sensitive sensor (9), the two light-sensitive sensors (9) being suitable for detecting images with respectively a specific number of pixels, and the two light-sensitive sensors (9) being configured such that they detect scattered laser light alternatingly with a specific delay time as image; or
        ii) comprising a camera which has a light-sensitive sensor surface and which is suitable for detecting images with respectively a specific number of pixels, the light-sensitive sensor surface being configured such that it detects scattered laser light with a specific delay time between two successive images as image; and

    e) transmitting the images measured at the detector to a data processing device, the data processing device implementing the following steps:

        1) standardising the measured images so that the measured intensity of the laser light obtains the same average and the same standard deviation in the case of all images;
        2) determining an offset and an angle of rotation of a pattern on at least a partial region of a first image relative to a pattern on at least a partial region of a second image following temporally thereafter and using this information in order to make the patterns of the two images congruent;
        3) subdividing the congruent images respectively into many individual partial areas with respectively a specific number of pixels and averaging the brightness values of the pixels of the many individual partial areas; and
        4) correlating the averaged brightness values of the pixels of the many individual partial areas of the first image with the averaged brightness values of the pixels of the many individual congruent partial areas of the second image, a correlation value being produced for each pair of congruent partial areas of the two images;
        5) averaging over all obtained correlation values to form an average correlation value for the two images;

wherein steps c) to d) are implemented with at least a first and a second, different from the first, delay time, an autocorrelation function is indicated from the averaged correlation values hereby respectively obtained in step e), and the average particle size is determined by means of the autocorrelation function, the measured temperature of the liquid medium, the viscosity and the refractive index of the liquid medium, the wavelength of the laser light and the angle of the detector.

2. Method according to claim 1, **characterised in that**

i) a liquid medium, which is transparent for the wavelength of the laser light, is used; and/or
ii) the particles have an average size in the nanometre range to micrometre range, preferably an average size of 1 nm to 1,000 $\mu$m, measured with dynamic light scattering.

3. Method according to one of the preceding claims, **characterised in that** the throughflow cuvette has a diameter perpendicular to the flow direction which is greater than the diameter of the radiated laser light.

4. Method according to one of the preceding claims, **characterised in that** the light-sensitive sensors and/or the light-sensitive sensor surface comprises a sensor which is selected from the group consisting of CCD sensors, CMOS-APS sensors, photodiode arrays, avalanche photodiode arrays and combinations hereof, or consists thereof.

5. Method according to one of the preceding claims, **characterised in that**,

i) in the data processing device, determination of an offset and of an angle of rotation of the signals measured at the two detectors is effected via a digital image processing method, preferably the "template matching" method; and/or
ii) the measured images are subdivided into more than 100, preferably more than 1,000, particularly preferably more than 10,000, in particular more than 90,000, partial areas.

6. Method according to one of the preceding claims, **characterised in that** the delay time between the first and second detector is less than 10 s, preferably less than 1 s, particularly preferably less than 10 ms, in particular less than 0.1 ms.

7. Method according to one of the preceding claims, **characterised in that**, in step d), in addition a determination of the angle distribution of the scattered light is effected, preferably via subdivision of the measured images at the first and/or second image sensor into many partial areas with respectively a specific number of pixels, the subdivision being effected along the scattering angle relative to the radiation direction of the laser and subsequently the angle distribution of the scattered light intensity being determined over the averaged brightness values for each partial area.

8. Method according to one of the preceding claims, **characterised in that**, between throughflow cuvette and detector, there is disposed

i) at least one cylindrical converging lens, preferably at least two cylindrical converging lenses, particularly preferably at least two cylindrical converging lenses with cylinder axes perpendicular to each other; and/or
ii) at least one spherical converging lens; and/or
iii) at least one diaphragm, preferably at least one slit diaphragm;

preferably from throughflow cuvette in the direction of the beam splitter, at least two cylindrical converging lenses or a cylindrical converging lens, a spherical converging lens, a diaphragm and a cylindrical converging lens.

9. Device for determining the average particle size of particles, which are suspended in a liquid and flowing medium, via dynamic light scattering, comprising

a) a throughflow cuvette (4) for directing a liquid medium with specific viscosity and specific refractive index, which comprises particles in suspended form, in a laminar flow along a flow direction;
b) a laser (1) for radiating laser light of a specific wavelength in a radiation direction onto a liquid medium situated in the throughflow cuvette (4), a collimator (2) being disposed between the laser (1) and the throughflow cuvette (4);
c) a temperature sensor for measuring the temperature of the liquid medium; and
d) a detector for measuring the intensity of scattered laser light in the form of images, the detector being disposed perpendicular to the flow direction and at a specific angle of 10° to < 180° relative to the radiation direction, and the detector

i) comprising a beam splitter (8) which deflects the scattered laser light onto a first and a second light-sensitive sensor (9), the two light-sensitive sensors (9) being suitable for detecting images with respectively a specific number of pixels, and the two light-sensitive sensors (9) being configured such that they detect scattered laser light alternatingly with a specific delay time as image; or
ii) comprising a camera which has a light-sensitive sensor surface which is suitable for detecting images with respectively a specific number of pixels, the light-sensitive sensor surface being configured such that it detects scattered laser light with a specific delay time between two successive images as image;

e) a data processing device for receiving the images measured at the detector, the data processing device being configured for implementing the following steps:

1) standardising the measured images so that the measured intensity of the laser light obtains the same average and the same standard deviation in the case of all images;

2) determining an offset and an angle of rotation of a pattern on at least one partial region of a first image relative to a pattern on at least a partial region of a second image following temporally thereafter and using this information in order to make the patterns of the two images congruent;

3) subdividing the congruent images respectively into many individual partial areas with respectively a specific number of pixels and averaging the brightness values of the pixels of the many individual partial areas; and

4) correlating the averaged brightness values of the pixels of the many individual partial areas of the first image with the averaged brightness values of the pixels of the many individual congruent partial areas of the second image, a correlation value being produced for each pair of congruent partial areas of the two images;

5) averaging over all obtained correlation values to form an average correlation value for the two images;

wherein the device is configured for measuring, with a first and at least a second, different from the first, delay time, a temperature of the liquid medium and an intensity of scattered light in form of images, for indicating an autocorrelation function from the averaged correlation values hereby respectively obtained by the data processing device, and for determining the average particle size by means of the autocorrelation function, the measured temperature of the liquid medium, the viscosity and the refractive index of the liquid medium, the wavelength of the laser light, the angle of the detector.

10. Device according to claim 9, **characterised in that** the throughflow cuvette has a diameter perpendicular to the flow direction which is greater than the diameter of the radiated laser light.

11. Device according to one of the claims 9 or 10, **characterised in that** the light-sensitive sensors and/or the light-sensitive sensor surface comprises a sensor which is selected from the group consisting of CCD sensors, CMOS-APS sensors, photodiode arrays, avalanche photodiode arrays and combinations hereof, or consists thereof.

12. Device according to one of the claims 9 to 11, **characterised in that** the data processing device is configured

i) that the determination of the offset and of the angle of rotation of the signals measured at the two detectors is effected via a digital image processing method, preferably via the "template matching" method; and/or

ii) for subdividing the measured images into more than 100, preferably more than 1,000, particularly preferably more than 10,000, in particular more than 90,000 partial areas.

13. Device according to one of the claims 9 to 12, **characterised in that** the first and the second detector are adjusted such that the delay time between the first and second detector is less than 10 s, preferably less than 1 s, particularly preferably less than 10 ms, in particular less than 0.1 ms.

14. Device according to one of the claims 9 to 13, **characterised in that** the device is furthermore configured for implementing a determination of the angle distribution of the scattered light, preferably via a subdivision of the measured images at the first and/or second image sensor into many partial areas with respectively a specific number of pixels, the subdivision being effected along the scattering angle relative to the radiation direction of the laser and subsequently the angle distribution of the scattered light intensity being determined over the averaged brightness values for each partial area.

15. Device according to one of the claims 9 to 14, **characterised in that**, between throughflow cuvette and detector, there is disposed

i) at least one cylindrical converging lens, preferably at least two cylindrical converging lenses, particularly preferably at least two cylindrical converging lenses with cylinder axes perpendicular to each other; and/or

ii) at least one spherical converging lens; and/or

iii) at least one diaphragm, preferably at least one slit diaphragm;

preferably from throughflow cuvette in the direction of the beam splitter, at least two cylindrical converging lenses or a cylindrical converging lens, a spherical converging lens, a diaphragm and a cylindrical converging lens.

**Revendications**

1. Procédé permettant de déterminer la taille moyenne de particules de particules qui sont en suspension dans un milieu liquide et fluide par le biais de la dispersion de lumière dynamique, comprenant les étapes suivantes :

   a) acheminement d'un milieu fluide ayant une viscosité définie et un indice de réfraction défini, qui contient sous une forme suspendue des particules dans un flux laminaire, à travers une cuvette à circulation (4) le long d'une direction d'écoulement ;
   b) émission de lumière laser ayant une longueur d'ondes définie dans une direction d'émission vers le milieu fluide par le biais d'un laser (1), un collimateur (2) étant disposé entre le laser (1) et la cuvette à circulation (4) ;
   c) mesure de la température du milieu fluide ;
   d) mesure de l'intensité de la lumière laser dispersée par le biais d'un détecteur sous la forme d'images, le détecteur étant disposé perpendiculairement à la direction d'écoulement et en formant un angle défini de 10° à < 180° avec la direction d'émission, et le détecteur

      i) contenant un séparateur de faisceau (8) qui dévie la lumière laser dispersée vers un premier et un deux deuxième capteur (9) photosensible, les deux capteurs (9) photosensibles étant adaptés pour détecter des images ayant respectivement un nombre défini de pixels d'image, et les deux capteurs (9) photosensibles étant configurés de telle sorte qu'ils détectent en tant qu'image la lumière laser dispersée de façon alternée avec un temps de retard défini; ou
      ii) contenant une caméra qui comporte une surface de capteur photosensible qui est adaptée pour détecter des images ayant respectivement un nombre défini de pixels d'image, la surface de capteur photosensible étant configurée de telle sorte qu'elle détecte en tant qu'image la lumière laser dispersée entre deux images qui se suivent avec un temps de retard défini; et

   e) transmission des images mesurées sur le détecteur à un dispositif de traitement de données, le dispositif de traitement de données réalisant les étapes suivantes :

      1) mise à l'échelle des images mesurées de telle sorte que l'intensité mesurée de la lumière laser reçoit pour toutes les images la même valeur moyenne et le même écart-type ;
      2) détermination d'un décalage et d'un angle de rotation d'un modèle sur au moins une zone partielle d'une première image par rapport à un modèle sur au moins une zone partielle d'une deuxième image qui suit dans le temps, et utilisation de cette information pour amener les modèles des deux images à coïncider ;
      3) division des images amenées en coïncidence respectivement en de nombreuses surfaces partielles individuelles ayant respectivement un nombre défini de pixels d'image, et formation d'une moyenne des valeurs de luminosité des pixels d'image des nombreuses surfaces partielles individuelles ; et
      4) mise en corrélation des valeurs de luminosité moyennées des pixels d'image des nombreuses surfaces partielles individuelles de la première image avec les valeurs de luminosité moyennées des pixels d'image des nombreuses surfaces partielles coïncidentes individuelles de la deuxième image, une valeur de corrélation résultant pour chaque paire des surfaces partielles amenées en coïncidence des deux images ;
      5) formation de la moyenne de toutes les valeurs de corrélation reçues pour donner une valeur de corrélation moyenne pour les deux images ;

   les étapes c) à d) étant effectuées pour au moins un premier et un deuxième temps de retard, différent du premier, une fonction d'autocorrélation étant indiquée à partir des valeurs de corrélation moyennées obtenues en l'occurrence respectivement dans l'étape e), et la taille de particules moyenne étant définie à l'aide de la fonction d'autocorrélation, de la température mesurée du milieu fluide, de la viscosité et de l'indice de réfraction du milieu fluide, de la longueur d'ondes de la lumière laser et de l'angle du détecteur.

2. Procédé selon la revendication 1, **caractérisé en ce que**

   i) il est utilisé un milieu fluide qui est transparent pour la longueur d'ondes de la lumière laser ; et/ou
   ii) les particules présentent une taille moyenne dans la plage nanométrique jusqu'à la plage micrométrique, de préférence une taille moyenne de 1 nm à 1 000 μm, mesurée avec la dispersion de lumière dynamique.

3. Procédé selon l'une des revendications précédentes, **caractérisé en ce que** la cuvette à circulation présente, perpendiculairement à la direction d'écoulement, un diamètre qui est supérieur au diamètre de la lumière laser émise.

4. Procédé selon l'une des revendications précédentes, **caractérisé en ce que** les capteurs photosensibles et/ou la surface de capteur photosensible contient ou se compose d'un capteur qui est sélectionné dans le groupe composé de capteurs CCD, capteurs CMOS-APS, réseaux de photodiodes, réseaux de photodiodes à avalanche et combinaisons de ceux-ci.

5. Procédé selon l'une des revendications précédentes, **caractérisé en ce que**

   i) la détermination d'un décalage et d'un angle de rotation des signaux mesurés sur les deux détecteurs s'effectue dans le dispositif de traitement de données par le biais d'un procédé de traitement d'images numérique, de préférence par le biais de la méthode « template matching » ; et/ou
   ii) les images mesurées sont divisées en plus de 100, de préférence plus de 1 000, de façon particulièrement préférée plus de 10 000, en particulier plus de 90 000 surfaces partielles.

6. Procédé selon l'une des revendications précédentes, **caractérisé en ce que** le temps de retard entre le premier et le deuxième détecteur est inférieur à 10 s, de préférence inférieur à 1 s, de façon particulièrement préférée inférieur à 10 ms, en particulier inférieur à 0,1 ms.

7. Procédé selon l'une des revendications précédentes, **caractérisé en ce que**, dans l'étape d), une détermination de la répartition angulaire de la lumière dispersée est en outre effectuée, de préférence par le biais d'une division des images mesurées sur le premier et/ou deuxième capteur d'images en de nombreuses surfaces partielles ayant respectivement un nombre défini de pixels d'image, la division s'effectuant le long de l'angle de dispersion relativement à la direction d'émission du laser, et ensuite la répartition angulaire de l'intensité de la lumière dispersée est déterminée par le biais des valeurs de luminosité moyennées pour chaque surface partielle.

8. Procédé selon l'une des revendications précédentes, **caractérisé en ce que**, entre la cuvette à circulation et le détecteur, il est disposé ou il a été disposé

   i) au moins une lentille convergente cylindrique, de préférence au moins deux lentilles convergentes cylindriques, de façon particulièrement préférée au moins deux lentilles convergentes cylindriques ayant des axes de cylindre perpendiculaires entre eux ; et/ou
   ii) au moins une lentille convergente sphérique ; et/ou
   iii) au moins un diaphragme, de préférence au moins un diaphragme à fente ; de préférence, à partir de la cuvette à circulation en direction du séparateur de faisceau, au moins deux lentilles convergentes cylindriques ou une lentille convergente cylindrique, une lentille convergente sphérique, un diaphragme et une lentille convergente cylindrique.

9. Dispositif permettant de déterminer la taille moyenne de particules de particules qui sont en suspension dans un milieu liquide et fluide, par le biais de la dispersion de lumière dynamique, contenant

   a) une cuvette à circulation (4) destinée à acheminer un milieu fluide, d'une viscosité définie et d'un indice de réfraction défini, qui contient sous une forme suspendue des particules dans un flux laminaire le long d'une direction d'écoulement ;
   b) un laser (1) destiné à émettre une lumière laser ayant une longueur d'ondes définie dans une direction d'émission vers un milieu fluide situé dans la cuvette à circulation (4), un collimateur (2) étant disposé entre le laser (1) et la cuvette à circulation (4) ;
   c) un capteur de température destiné à mesurer la température du milieu fluide ; et
   d) un détecteur destiné à mesurer l'intensité de la lumière laser dispersée sous la forme d'images, le détecteur étant disposé perpendiculairement à la direction d'écoulement et en formant un angle défini de 10° à < 180° avec la direction d'émission, et le détecteur

   i) contenant un séparateur de faisceau (8) qui dévie la lumière laser dispersée vers un premier et un deuxième capteur (9) photosensible, les deux capteurs (9) photosensibles étant adaptés pour détecter des images ayant respectivement un nombre défini de pixels d'image, et les deux capteurs (9) photosensibles étant configurés de telle sorte qu'ils détectent en tant qu'image la lumière laser dispersée de façon alternée avec un temps de retard défini; ou
   ii) contenant une caméra qui comporte une surface de capteur photosensible qui est adaptée pour détecter des images ayant respectivement un nombre défini de pixels d'image, la surface de capteur photosensible étant configurée de telle sorte qu'elle détecte en tant qu'image la lumière laser dispersée entre deux images qui se suivent avec un temps de retard défini ; et

e) un dispositif de traitement de données destiné à recevoir les images mesurées sur le détecteur, le dispositif de traitement de données étant configuré pour réaliser les étapes suivantes :

1) mise à l'échelle des images mesurées de telle sorte que l'intensité mesurée de la lumière laser reçoit pour toutes les images la même valeur moyenne et le même écart-type ;

2) détermination d'un décalage et d'un angle de rotation d'un modèle sur au moins une zone partielle d'une première image par rapport à un modèle sur au moins une zone partielle d'une deuxième image qui suit dans le temps, et utilisation de cette information pour amener les modèles des deux images à coïncider ;

3) division des images amenées en coïncidence respectivement en de nombreuses surfaces partielles individuelles ayant respectivement un nombre défini de pixels d'image, et formation d'une moyenne des valeurs de luminosité des pixels d'image des nombreuses surfaces partielles individuelles ; et

4) mise en corrélation des valeurs de luminosité moyennées des pixels d'image des nombreuses surfaces partielles individuelles de la première image avec les valeurs de luminosité moyennées des pixels d'image des nombreuses surfaces partielles coïncidentes individuelles de la deuxième image, une valeur de corrélation résultant pour chaque paire des surfaces partielles amenées en coïncidence des deux images ;

5) formation de la moyenne de toutes les valeurs de corrélation reçues pour donner une valeur de corrélation moyenne pour les deux images ;

le dispositif étant configuré pour, pour un premier et au moins un deuxième temps de retard, différent du premier, mesurer une température du milieu fluide et une intensité de la lumière laser dispersée sous la forme d'images, indiquer une fonction d'autocorrélation à partir des valeurs de corrélation moyennées reçues en l'occurrence respectivement par le dispositif de traitement de données, et déterminer la taille de particules moyenne à l'aide de la fonction d'autocorrélation, de la température mesurée du milieu fluide, de la viscosité et de l'indice de réfraction du milieu fluide, de la longueur d'ondes de la lumière laser et de l'angle du détecteur.

10. Dispositif selon la revendication 9, **caractérisé en ce que** la cuvette à circulation présente, perpendiculairement à la direction d'écoulement, un diamètre qui est plus grand que le diamètre de la lumière laser émise.

11. Dispositif selon l'une des revendications 9 ou 10, **caractérisé en ce que** les capteurs photosensibles et/ou la surface de capteur photosensible contient ou se compose d'un capteur qui est sélectionné dans le groupe composé de capteurs CCD, capteurs CMOS-APS, réseaux de photodiodes, réseaux de photodiodes à avalanche et combinaisons de ceux-ci.

12. Dispositif selon l'une des revendications 9 à 11, **caractérisé en ce que** le dispositif de traitement de données est configuré de telle sorte que

i) la détermination du décalage et de l'angle de rotation des signaux mesurés sur les deux détecteurs s'effectue par le biais d'un procédé de traitement d'images numérique, de préférence par le biais de la méthode « template matching » ; et/ou

ii) pour diviser les images mesurées en plus de 100, de préférence plus de 1 000, de façon particulièrement préférée plus de 10 000, en particulier plus de 90 000 surfaces partielles.

13. Dispositif selon l'une des revendications 9 à 12, **caractérisé en ce que** le premier et le deuxième détecteur sont réglés de telle sorte que le temps de retard entre le premier et le deuxième détecteur est inférieur à 10 s, de préférence inférieur à 1 s, de façon particulièrement préférée inférieur à 10 ms, en particulier inférieur à 0,1 ms.

14. Dispositif selon l'une des revendications 9 à 13, **caractérisé en ce que** le dispositif est en outre configuré pour effectuer une détermination de la répartition angulaire de la lumière dispersée, de préférence par le biais d'une division des images mesurées sur le premier et/ou deuxième capteur d'images en de nombreuses surfaces partielles ayant respectivement un nombre défini de pixels d'image, la division s'effectuant le long de l'angle de dispersion relativement à la direction d'émission du laser, et ensuite la répartition angulaire de l'intensité de la lumière dispersée est déterminée par le biais des valeurs de luminosité moyennées pour chaque surface partielle.

15. Dispositif selon l'une des revendications 9 à 14, **caractérisé en ce que**, entre la cuvette à circulation et le détecteur, il est disposé

i) au moins une lentille convergente cylindrique, de préférence au moins deux lentilles convergentes cylindriques, de façon particulièrement préférée au moins deux lentilles convergentes cylindriques ayant des axes de cylindre perpendiculaires entre eux ; et/ou

ii) au moins une lentille convergente sphérique ; et/ou

iii) au moins un diaphragme, de préférence au moins un diaphragme à fente ; de préférence, à partir de la cuvette à circulation en direction du séparateur de faisceau, au moins deux lentilles convergentes cylindriques ou une lentille convergente cylindrique, une lentille convergente sphérique, un diaphragme et une lentille convergente cylindrique.

Figur 1

Figur 2

A)

B)

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KWANG, I. et al.** *Applied Optics,* 2006, vol. 45, 2186-2190
- **LIU et al.** *Procedia Engineering,* 2015, vol. 102, 904-910
- **PUTHUSSERICKAL S.R. et al.** *Langmuir,* 2015, vol. 31, 3-12